# EUROPÄISCHE PATENTSCHRIFT

(11) **EP 1 515 835 B1**
(45) Veröffentlichungstag und Bekanntmachung des Hinweises auf die Patenterteilung: **12.12.2007**
(21) Anmeldenummer: 03757063.7
(22) Anmeldetag: 11.06.2003
(51) Int. Cl.: B32B 1/00, B32B 9/06, C04B 35/56

(54) **KOHLENSTOFFWABENKÖRPER**
HONEYCOMB-SHAPED CARBON ELEMENT
CORPS CARBONE EN NID D'ABEILLES

(30) Priorität: 11.06.2002 DE 10225953
(43) Veröffentlichungstag der Anmeldung: 23.03.2005
(73) Patentinhaber: Schunk Kohlenstofftechnik GmbH, 35452 Heuchelheim (DE)
(72) Erfinder: SCHEIBEL, Thorsten, 61231 Bad Nauheim (DE); WEISS, Roland, 35625 Hüttenberg (DE); HENRICH, Martin, 35582 Wetzlar (DE); EBERT, Marco, 35083 Wetter (DE)
(74) Vertreter: Stoffregen, Hans-Herbert
(86) Internationale Anmeldenummer: PCT/EP2003/006123
(87) Internationale Veröffentlichungsnummer: WO 2003/103940

(56) Entgegenhaltungen:
- EP-A- 0 359 099
- EP-A- 0 477 505
- EP-A- 0 735 387
- FR-A- 2 710 874
- US-A- 3 676 173
- US-A- 4 598 007
- US-A- 4 824 711
- US-A- 5 632 834
- US-A- 5 738 750
- US-A- 5 893 955
- US-B1- 6 187 123

## Beschreibung

Die Erfindung bezieht sich auf ein Verfahren zur Herstellung eines eine Wabenstruktur aufweisenden Kohlenstoffkörpers.

Entsprechende Körper mit Wabenstruktur (engl. = honeycomb structure) zeigen den Vorteil einer hohen Steifigkeit bei geringem Gewicht. Um aus Kohlenstoffmaterial entsprechende Wabenstrukturen herzustellen, wird nach der US 5,567,500 vorgeschlagen, mehrere Lagen von Fasermaterial in voneinander abweichender Faserrichtung zu verwenden, wobei zwischen entsprechenden Schichten die Wabengeometrie vorgebende Formkerne angeordnet werden, um sodann durch Hitzeeinwirkung die Schichten auszuhärten, wobei gleichzeitig ein Verbinden zwischen diesen erfolgt. Hierzu werden die Schichten mit einem Harz imprägniert. Dabei handelt es sich bei den Lagen insbesondere um Gewebe oder Prepregs.

Das aufwendige Herstellungsverfahren zum Ausbilden der Wabenstrukturen wird in Kauf genommen, um insbesondere in Flugzeugen benutzte Sandwich-Bauelemente oder Platten zu erhalten, die bei geringem Gewicht überaus stabil sind.

Auch gibt es Wabenkörper, die aus Aramid-Papier (NOMEX®) oder Aluminium bestehen.

Aus der US 4,518,704 wird ein eine Wabenstruktur aufweisender Körper beschrieben, der aus Aktivkohle hergestellt ist. Hierzu wird eine die Aktivkohle enthaltende Mischung extrudiert, der Formkörper sodann getrocknet und schließlich pyrolysiert.

Bei einem Verfahren zur Herstellung von porösen Faserbauteilen nach der DE 43 01 396 C2 werden Fasergelege aus Endlosfasern hergestellt, in zumindest zwei Lagen aufeinandergelegt und sodann miteinander verbunden.

Nach der JP 57027130 A bzw. der JP 11217278 A werden aus Aktivkohle poröse Körper bzw. Wabenkörper hergestellt. Dabei werden die Körper nach deren Formgebung getrocknet und pyrolysiert.

Der vorliegenden Erfindung liegt das Problem zu Grunde, einen Kohlenstoffkörper mit Wabenstruktur zur Verfügung zu stellen, der einfach herstellbar ist, eine hohe mechanische Festigkeit aufweist und bei dem gezielte Materialeigenschaften einstellbar sind.

Zur Lösung des Problems wird vorgeschlagen die Verwendung eines vorgefertigten eine Wabenstruktur aufweisenden Basiskörpers aus harzimprägniertem Papier oder Vlies, wobei der Basiskörper zunächst pyrolysiert und sodann stabilisiert und/oder verdichtet wird.

Abweichend vom vorbekannten Stand der Technik wird zur Herstellung des Kohlenstoffkörpers bereits ein eine Wabenstruktur aufweisender vorgefertigter Basiskörper verwendet, der im hinreichenden Umfang Material aufweist, das zu Kohlenstoff konvertierbar ist, so dass das nach dem Stand der Technik erforderliche schichtweise Anordnen von Kohlenstoffgeweben oder Prepregs nicht erforderlich ist.

Mit anderen Worten wird ein handelsüblich zur Verfügung stehender und auch an sich handelbarer Wabenkörper benutzt, um durch Pyrolyse und Stabilisierung einen Wabenkörper aus Kohlenstoff herzustellen, der z. B. mit Platten beplankt werden kann, um als Sandwich-Bauteil in der Luft- bzw. Raumfahrt genutzt zu werden. Insbesondere aber kann ein entsprechend hergestellter eine Wabenstruktur aufweisender Kohlenstoffkörper in der chemischen Industrie z. B. als Katalysator oder Filter verwendet werden.

Insbesondere ist vorgesehen, dass als Basiskörper ein aus harzimprägniertem Aramid-Papier bestehender Wabenkörper verwendet wird. Unabhängig hiervon kann der pyrolysierte Basiskörper durch Materialabscheidung aus der Gasphase stabilisiert bzw. verdichtet werden. Bevorzugterweise ist hierzu vorgesehen, dass der pyrolysierte Basiskörper durch insbesondere CVI (Chemical Vapor Infiltration) und/oder CVD (Chemical Vapor Deposition) - Abscheidung mit C, SiC, B₄C und/oder Si stabilisiert bzw. verdichtet wird.

Ferner wird vorgeschlagen, dass der vorgefertigte Basiskörper bei einer Temperatur T₁ mit 850 °C ≤ T₁ ≤ 1100 °C, insbesondere 900 °C ≤ T₁ ≤ 1000 °C carbonisiert wird. Auch besteht die Möglichkeit, den Basiskörper bei der Temperatur T₂ mit 1700 °C ≤ T₂ ≤ 3100 °C, insbesondere 1800 °C ≤ T₂ ≤ 2450 °C zu graphitieren.

Der vorgefertigte Basiskörper besteht zumindest aus einem Harz sowie einem die Wabenstruktur vorgebenden Verstärkungsmittel. Bei dem Harz kann es sich um Epoxide mit hoher C-Ausbeute, Thermoplaste wie PEEK, PI, Phenolharze, Furanharze, epoxilierte Novalakharze oder sonstige Bindersysteme handeln, die einen Zusammenhalt bzw. eine Formstabilität während und nach der Pyrolyse aufweisen und gewährleisten.

Der vorgefertigte eine Wabenstruktur aufweisende Basiskörper aus Papier bzw. Vlies sollte hochtemperaturstabile Fasern wie C-Fasern oder SiC-Fasern oder pyrolysierbare Fasern mit genügendem bzw. hinreichend hohem Kohlenstoffrückstand aufweisen. Hierzu gehören zum Beispiel Phenolharzfasern, Aramidfasern, Flachs, Hanf oder sonstige Naturfasern.

Vorzugsweise kann jedoch erwähntermaßen ein vorgefertigter Wabenkörper aus zum Beispiel Aramid-Papier, das mit einem Harz wie Phenolharz getränkt ist, verwendet werden. Entsprechende Wabenkörper sind bei der Firma Dupont de Nemours beziehbar. Diese werden unter der Bezeichnung NOMEX® angeboten.

Des Weiteren sieht die Erfindung vor, dass der pyrolysierte, die Wabenstruktur aufweisende Kohlenstoffkörper und der Stabilisierung nachbehandelt bzw. veredelt werden. Dies kann ebenfalls durch Oberflächentechniken wie CVI-Techniken (Chemical Vapor Infiltration), CVD-Verfahren (Chemical Vapor Deposition), Pech-Coating oder eine Behandlung mit kohlenstoffhaltigen Lösungen wie Harzen, Expoxidharzen, Phenolharzen und anschließender Konvertierung in Kohlenstoff möglich sein. Auch eine Nachbehandlung mit keramischem Schlicker ist möglich, der in eine Keramik wie SiC umgewandelt wird.

Insbesondere ist vorgesehen, dass eine SiC-Oberflächenschicht durch Silizieren ausgebildet wird. Hierzu kann der Kohlenstoffkörper mit CVD- oder CVI-Prozessen behandelt werden, um SiC oder PyC (Pyrographit-Schichten) auszubilden. Auch ein Coaten mit flüssigem Pech oder Polymeren ist möglich. So beschichteter Kohlenstoffkörper wird anschließend carbonisiert bzw. graphitiert.

Entsprechende eine Wabenstruktur aufweisende Kohlenstoffkörper sind insbesondere für Sandwich-Bauteile oder Paneelen bestimmt, die zum Beispiel in der Luft- bzw. Raumfahrt zum Einsatz gelangen. Eine Verwendung ist aber auch im Hochtemperaturbereich, als Tragstruktur für Katalysatoren- und Filteranwendungen, Füllkörper für Reaktor- und Chemieanlagenbau, hochdurchlässige Tragstrukturen für Hochtemperaturanwendungen unter Einsatz in korrosiven Medien, Stoffaustauschpackungen für Chemieanlagen, Füllkörper in Desorptionskolonnen zur Wasseraufbereitung, Füllkörper in Absorptionskolonnen zur Abgasreinigung, Flüssigkeits- und Gasverteiler, Isolationswerkstoffe für thermische Anwendungen oder Widerstandsheizelemente zum Beispiel bei Prozessgasheizung möglich.

Die Wabenstruktur selbst kann in gewohnter Weise hexagonal sein. Aber auch andere Geometrien wie Kreise oder Vierecke sind möglich.

Typische Abmessung eines erfindungsgemäß hergestellten eine Wabenstruktur aufweisenden Kohlenstoffkörpers sind:

Plattengröße 900 mm x 600 mm mit einer Wabenhöhe von 40 mm. Die Waben können eine hexagonale Struktur mit typischen Zellenweiten von 7 mm x 4 mm und Wandstärken von typischerweise 0,2 mm aufweisen.

Die Erfindung wird nachstehend anhand eines Ausführungsbeispiels näher erläutert. Aus diesem und den Ansprüchen - für sich und/oder in Kombination - ergeben sich weitere Einzelheiten, Vorteile und Merkmale der Erfindung.

Um einen aus Kohlenstoff bestehenden Wabenkörper hexagonaler Struktur zur Verwendung in einer lasttragenden Sandwichplatte zu verwenden, wurde zunächst eine NOMEX®-Wabe vom Typ ECA4,8-48 unter Schutzgas pyrolysiert. Die Pyrolyse erfolgte bei Temperaturen im Bereich zwischen 800 °C und 1050 °C. Die daraus resultierende sehr spröde Kohlenstoffwabenstruktur wird sodann mittels CVI-Verfahren mit PyC (Pyrokohlenstoff)-Abscheidungen stabilisiert. Der Prozess läuft bei einer Temperatur von ca. 1250 °C ab und dauert ca. 60 Stunden.

Die so hergestellte Kohlenstoffwabenplatte zeigte gute Druckfestigkeitswerte. Um die mechanischen Eigenschaften weiter zu erhöhen, wurde die Kohlenstoffwabenplatte einer Harzimprägnierung mittels Phenolharz und einer anschließenden Recarbonisierung bei Temperaturen im Bereich zwischen 950 °C und 1050 °C unterzogen. Zur weiteren Erhöhung der mechanischen Eigenschaften wurde die Imprägnierung und Recarbonisierung weitere zwei Mal wiederholt. Anschließend wurde auf eine entsprechend hergestellte Kohlenstoffwabenplatte mittels eines Phenolharz-Klebefilms eine bereits vorgefertigte CFC-Platte (kohlenstofffaserverstärkte Kohlenstoffplatte) (ca. 2 mm dick) mittels einer Heißpresse unter Druck (ca. 2 bar) und Temperatur (ca. 140 °C) jeweils auf den Oberflächen, also den Stirnflächen der Waben aufgebracht. Die so entstandene CFC-Sandwichplatte wurde abschließend einer Carbonisierung bei ca. 1000 °C unterzogen, um den die Klebung bildenden Phenolharzfilm in Kohlenstoff umzuwandeln.

Auf diese Weise wurde eine hochsteife CFC-Sandwichplatte hergestellt, die als Tragestruktur im Hochtemperaturofenbau eingesetzt werden konnte.

## Patentansprüche

1. Verfahren zur Herstellung eines Kohlenstoffwabenkörpers unter Verwendung eines harzimprägnierten Basiskörpers mit Wabenstruktur aus Papier oder Vlies, der zunächst pyrolysiert und sodann verdichtet bzw. stabilisiert wird,
**dadurch gekennzeichnet,**
**dass** der stabilisierte Wabenkörper mit einer kohlenstoffhaltigen Lösung beschichtet und sodann erneut pyrolysiert wird.

2. Verfahren nach Anspruch 1,
**dadurch gekennzeichnet,**
**dass** als Basiskörper ein aus harzimprägniertem Aramid-Papier bestehender Wabenkörper verwendet wird.

3. Verfahren nach Anspruch 1,
**dadurch gekennzeichet,**
dass der pyrolysierte Basiskörper durch Materialabscheidung aus der Gasphase stabilisiert bzw. verdichtet wird.

4. Verfahren nach Anspruch 3,
**dadurch gekennzeichnet,**
**dass** der pyrolysierte Basiskörper durch insbesondere CVI- und/oder CVD-Abscheidung mit C, SiC, B₄C und/oder Si stabilisiert bzw. verdichtet wird.

5. Verfahren nach Anspruch 1,
**dadurch gekennzeichnet,**
**dass** auf dem pyrolysierten Basiskörper eine SiC oder PyC-Schicht ausgebildet wird.

6. Verfahren nach Anspruch 1.
**dadurch gekennzeichnet,**
**dass** der pyrolysierte und stabilisierte bzw. verdichtete Basiskörper mit einem keramischen Schlicker beschichtet wird, der in Keramik wie SiC umgewandelt wird.

7. Verfahren nach Anspruch 1,
**dadurch gekennzeichnet,**
**dass** der die Wabenstruktur aufweisende Basiskörper bei einer Temperatur T₁ mit 850 °C ≤ T₁ ≤ 1100 °C, insbesondere 900 °C ≤ T₁ ≤ 1000 °C carbonisiert wird.

8. Verfahren nach Anspruch 1 oder 7.
**dadurch gekennzeichnet,**
**dass** der Basiskörper bei einer Temperatur T₂ mit 1700 °C ≤ T₂ ≤ 3100 °C, insbesondere 1800 °C ≤ T₂ ≤ 2450 °C graphitiert wird.

9. Verfahren nach Anspruch 1,
**dadurch gekennzeichnet,**
**dass** als Basiskörper ein solcher verwendet wird, der als Verstätkungsmaterial hochtemperaturstabilc Fasern wie Kohlenstofffasern oder SiC-Fasern oder pyrolysierbare Fasern mit hinreichendem Kohlensloffrückstand wie Phenolharzfasern, Aramidfasern, Flachs, Hanf oder sonstige Cellulosefasern aufweist.

10. Verfahren nach zumindest einem der vorhergehenden Ansprüche,
**dadurch gekennzeichnet,**
**dass** der pyrolysierte und stabilisierte bzw, verdichtete Basiskörper anschließend einer weiteren Verfestigung bzw. Veredelung unterzogen wird.

11. Verfahren nach zumindest einem der vorhergehenden Ansprüche,
**dadurch gekennzeichnet,**
**dass** der pyrolysierte und stabilisierte bzw. verdichtete Basiskörper siliziert wird.

12. Verwendung eines handelsüblichen zur Verfugung stehenden Wabenkörpers aus Aramid-Papier, das mit einem Harz getränkt, pyrolysiert und sodann stabilisiert und/oder verdichtet wird, als Filter, Katalysator oder zu beplankendes Bauteil für die Luft- und Raumfahrt.

## Claims

1. Method for producing a honeycomb-shaped carbon body by using a resin-impregnated base body having a honeycomb structure made from paper or fleece, said base body being first pyrolyzed and then compressed and stabilized, respectively,
**characterized in**
**that** the stabilized honeycomb-shaped body is coated with a carbon-containing solution and then re-pyrolyzed.

2. Method according to claim 1,
**characterized in**
**that** as base body a honeycomb-shaped body made from resin-impregnated Aramid paper is used

3. Method according to claim 1,
**characterized in**
**that** the pyrolyzed base body is stabilized and compressed, respectively, by means of material precipitation from the gaseous phase.

4. Method according to claim 3,
**characterized in**
**that** the pyrolyzed base body is stabilized and compressed, respectively, in particular by means of CVI and/or CVD precipitation with C, SiC, B₄C and/or Si.

5. Method according to claim 1,
**characterized in**
**that** an SiC or PyC layer is formed on the pyrolyzed base body.

6. Method according to claim 1,
**characterized in**
**that** the pyrolyzed and compressed or stabilized base body is coated with a ceramic slip, which is converted into ceramics such as SiC.

7. Method according to claim 1,
**characterized in**
**that** the base body having the honeycomb-shaped structure is carbonized at a temperature T₁ wherein 850°C ≤ T₁ ≤ 1100°C, especially 900°C ≤ T₁ ≤ 1000°C.

8. Method according to claim 1 or 7,
**characterized in**
**that** the base body is graphitized at a temperature T₂ wherein 1700°C ≤ T₂ ≤ 3100°C, especially 1800°C ≤ T₂ ≤ 2450°C.

9. Method according to claim 1,
**characterized in**
**that** as base body a body is used that comprises high temperature stable fibers such as carbon fibers or SiC fibers or pyrolyzable fibers with sufficient carbon residue such as phenolic resin fibers, Aramid fibers, flax, hemp or other cellulose fibers as the reinforcing material.

10. Method according to at least one of the preceding claims,
**characterized in**
**that** the pyrolyzed and stabilized or compressed base body is subsequently subjected to a further strengthening and finishing operation, respectively.

11. Method according to at least one of the preceding claims,
**characterized in**
**that** the pyrolyzed and stabilized or compressed base body is siliconized.

12. Use of a standard available base body consisting of Aramid paper, that is saturated with resin, pyrolyzed and then stabilized and/or compressed, as filter, catalyst or component to be planked for aviation and astronautics.

## Revendications

1. Procédé de fabrication d'un corps en nid d'abeilles en carbone avec utilisation d'un corps de base imprégné de résine de structure en nid d'abeilles en papier ou non tissé, qui est d'abord pyrolysé et ensuite densifié ou stabilisé,
**caractérisé en ce que**
le corps en nid d'abeilles stabilisé est revêtu d'une solution contenant du carbone et ensuite à nouveau pyrolysé.

2. Procédé selon la revendication 1,
**caractérisé en ce que**
comme corps de base on utilise un corps en nid d'abeilles constitué d'aramide - papier imprégné de résine -.

3. Procédé selon la revendication 1,
**caractérisé en ce que**
le corps de base pyrolysé est stabilisé ou densifié par dépôt de matière en phase gazeuse.

4. Procédé selon la revendication 3,
**caractérisé en ce que**
le corps de base pyrolysé est stabilisé ou densifié par dépôt en particulier CVI et/ou CVD avec C, SiC, B₄ C et/ou Si .

5. Procédé selon la revendication 1,
**caractérisé en ce que**
se trouve formée sur le corps de base pyrolysé une couche de SiC ou de PyC.

6. Procédé selon la revendication 1,
**caractérisé en ce que**
le corps de base pyrolysé et stabilisé ou densifié est revêtu d'une barbotine céramique qui est transformée en céramique comme le SiC.

7. Procédé selon la revendication 1,
**caractérisé en ce que**
le corps de base présentant la structure en nid d'abeilles est carbonisé à une température T₁ telle que 850° ≤ T₁ ≤ 1100°C, en particulier 900°C ≤ T₁ ≤ 1000°C.

8. Procédé selon la revendication 1 ou 7,
**caractérisé en ce que**,
le corps de base est graphité à une température T₂ telle que 1700°C ≤ T₂ ≤ 3100°C, en particulier 1800°C ≤ T₂ ≤ 2450°C

9. Procédé selon la revendication 1,
**caractérisé en ce qu'**
on utilise un corps de base qui renferme comme matière de renforcement des fibres très stables à la température comme les fibres de carbone ou des fibres de SiC ou des fibres pyrolysables avec un résidu de carbone suffisant comme les fibres de résines phénoliques, les fibres d'aramide, le lin, le chanvre ou d'autres fibres de cellulose.

10. Procédé selon au moins une des revendications précédentes,
**caractérisé en ce que**
le corps de base pyrolysé et stabilisé ou densifié est ensuite soumis à une consolidation ou à un ennoblissement supplémentaires.

11. Procédé selon au moins une des revendications précédentes,
**caractérisé en ce que**
le corps de base pyrolysé et stabilisé ou densifié est silicié.

12. Utilisation d'un corps en nid d'abeilles disponible dans le commerce constitué d'aramide-papier, qui est imbibé d'une résine, pyrolysé, et ensuite stabilisé et/ou densifié, comme filtre, catalyseur ou composant à revêtir des planches pour les domaines aéronautique et spatial.
